# EUROPÄISCHE PATENTSCHRIFT

(11) **EP 2 263 903 B1**
(45) Veröffentlichungstag und Bekanntmachung des Hinweises auf die Patenterteilung: **09.05.2012**
(21) Anmeldenummer: 10162615.8
(22) Anmeldetag: 12.05.2010
(51) Int. Cl.: B60K 23/08, B60T 8/1769, B60T 8/17, B60T 8/172, B60T 8/174, B60T 8/1763, B60T 8/171, B62D 15/02, B60R 21/00

(54) **Verfahren und Vorrichtung zum Bestimmen eines schlupfbedingten Ortsfehlers eines Ortes eines Kraftfahrzeuges bei auftretendem Bremsschlupf**
Method and device for determining a position error of a vehicle resulting from wheel skidding while braking
Procédé et dispositif de détermination d'une erreur de positionnement d'un véhicule automobile suite à un dérapage lors du freinage du véhicule

(30) Priorität: 18.06.2009 DE 102009027012
(43) Veröffentlichungstag der Anmeldung: 22.12.2010
(73) Patentinhaber: Robert Bosch GmbH, 70442 Stuttgart (DE)
(72) Erfinder: Pampus, Christian, 71229 Leonberg (DE); Schneider, Marcus, 71642 Ludwigsburg (DE)

(56) Entgegenhaltungen:
- EP-A2- 0 585 134
- DE-A1-102004 057 797
- JP-A- 2003 276 540
- US-A- 5 797 664

## Beschreibung

### Stand der Technik

Die vorliegende Erfindung betrifft ein Verfahren und eine Vorrichtung zum Bestimmen eines schlupfbedingten Ortsfehlers eines Ortes eines Kraftfahrzeuges bei auftretendem Bremsschlupf der Räder des Kraftfahrzeuges.

Ein Ortsfehler des Kraftfahrzeuges liegt vor, wenn eine Differenz zwischen dem tatsächlichen Ort des Kraftfahrzeuges und einem durch das Kraftfahrzeug, insbesondere durch ein Einparkhilfe-System des Kraftfahrzeuges, angenommenen oder berechneten Ort besteht.

Ein solcher Ortsfehler, insbesondere ein schlupfbedingter Ortsfehler, wirkt sich beispielsweise bei einer Unterstützung des Einparkvorgangs des Kraftfahrzeuges durch das Einparkhilfe-System nachteilig aus.

Zur Unterstützung des Einparkvorgangs sind Einparkhilfe-Systeme oder Parklückenvermessungs-Systeme mit Ultraschall-Sensoren als Parklückenvermessungs-Sensoren bekannt. Solche Einparkhilfe-Systeme sind beispielsweise aus der DE 38 13 083 A1 bekannt.

Parklückenvermessungs-Sensoren sind seitlich am Kraftfahrzeug angebracht und messen während der Fahrt die Distanz zu den neben dem Fahrzeug befindlichen Objekten, die sich beispielweise am Seitenrand der Straße befinden. Aus den Ausgangswerten des Parklückenvermessungs-Sensors kann ein sogenannter Distanzmesswert-Über-Vorbei-Fahrweg-Verlauf errechnet werden. In dem errechneten Distanzmesswert-Über-Vorbei-Fahrweg-Verlauf wird mittels eines Eckenermittlungsalgorithmus nach vorbestimmten Charakteristika, z. B. von Fahrzeugecken, gesucht. Werden zwei Fahrzeugecken gefunden und werden zwischen diesen beiden gefundenen Fahrzeugecken keine weiteren relevanten Objekte mehr detektiert, so wird der Abstand zwischen den Fahrzeugecken berechnet und somit die Größe der sich vermutlich dazwischen befindlichen Parklücke ermitteln und dem Fahrer geeignet zur Anzeige gebracht.

Weiter ist es bekannt, die berechneten Positionen der aufgefunden Fahrzeugecken derart weiterzuverarbeiten, dass ein entsprechend ausgerüstetes Kraftfahrzeug semiautonom einparken kann. In diesem Zusammenhang bedeutet semiautonom, dass das Fahrzeug automatisch lenkt und der Fahrer lediglich die Bremse betätigt und den Gang wechselt. Eine herkömmliche Vorrichtung zur semiautonomen Unterstützung des Einparkvorgangs bei Fahrzeugen ist aus der DE 10 2005 008 176 A1 bekannt, bei welcher Mittel zur automatischen Lenkung die Lenkbewegungen beim Einparkvorgang übernehmen, um das Fahrzeug auf einer vorberechneten Einpark-Trajektorie in eine Parklücke zu steuern.

Bei berechneter Einpark-Trajektorie beginnt das System oder Einparkhilfe-System zur Unterstützung des Einparkvorgangs, das Lenkrad des Fahrzeuges derart zu bewegen, dass der Fahrer nach mehrmaligem Vor- und Rückwärtsfahren in der Parklücke zu stehen kommt.

Herkömmlicherweise wird der Ort des Kraftfahrzeuges - sowohl während der Parklückensuche als auch während des Einparkvorgangs - im Wesentlichen durch Verwendung von Radwegsensoren bestimmt. Diese an den einzelnen Rädern des Kraftfahrzeuges montierten Radwegsensoren liefern einen Impuls infolge der Raddrehung über einen bestimmten Fahrtweg, beispielsweise 4 cm. Die gelieferten Impulses dienen als Eingangssignale zur Berechnung der gefahrenen Strecke. In Abhängigkeit der berechneten gefahrenen Strecke kann der Ort des Kraftfahrzeuges berechnet werden.

Ein grundsätzliches Problem bei einer Bestimmung des Ortes in Abhängigkeit der impulse der Radwegsensoren ergibt sich bei Vorliegen von Schlupf oder Bremsschlupf. Bremsschlupf tritt zum Beispiel beim Anhalten auf einem rutschigen Untergrund, wie beispielsweise auf Eis, Schnee, Split, Schotter oder dergleichen auf. Dabei drehen sich die Räder des Kraftfahrzeuges aufgrund der betätigten Bremse mit einer geringeren Geschwindigkeit, als die reale Fahrzeuggeschwindigkeit in einer schlupffreien Situation betragen würde. Im Grenzfall können die Räder in einer schlupfbehafteten Situation sogar blockieren.

### Vorteile der Erfindung

DE 10 2004 057797 A1 ist als nächstliegender Stand der Technik zu sehen und zeigt ein Verfahren, wobei Messungenauigkeiten der Raddrehzahlsensoren aufgrund eines etwaigen Schlupfes der Kraftfahrzeugrädern durch ein Messsignal eines Beschleunigungssensors korrigiert werden können, so dass die Genauigkeit der durch das Kraftfahrzeug zurückgelegten Wegstrecke während des vorbestimmten Zeitraums während des Einparkvorgangs erhöht wird.

Das erfindungsgemäße Verfahren mit den Merkmalen des Anspruchs 1 sowie die erfindungsgemäße Vorrichtung mit den Merkmalen des Anspruchs 15 weisen jeweils den Vorteil auf, dass ein schlupfbedingter Ortsfehler sehr genau bestimmt werden kann. Durch die genaue Bestimmung des Ortsfehlers ist es weiterhin möglich, auch einen geringen Schlupf oder Bremsschlupf zu erkennen. Dadurch kann vorteilhafterweise auch ein prinzipbedingter Off-Set des Beschleunigungssensors kompensiert werden. Dieser Off-Set kann elektrisch oder mechanisch bedingt sein oder sich auch durch einen Schrägstand des Kraftfahrzeuges an einem Hang ergeben. Die Kompensation dieses Off-Sets ist auch während der Fahrt möglich. Damit kann ein semi-automatisches System zur Unterstützung des Einparkvorgangs eines Kraftfahrzeuges in die Lage versetzt werden, auch einen aus ABS- oder ESP-Sicht geringen Bremsschlupf zu kompensieren, auch wenn ein Off-Set im Beschleunigungssignal vorliegt.

Damit wird die Wahrscheinlichkeit einer Kollision mit Parklücken begrenzenden Objekten beim Einparkvorgang deutlich verringert bis vermieden.

Demgemäß wird ein Verfahren zum Bestimmen eines schlupfbedingten Ortsfehlers eines Ortes eines Kraftfahrzeuges bei auftretendem Bremsschlupf vorgeschlagen, welches folgende Schritte hat:
a) Berechnen eines ersten Geschwindigkeitsverlaufes zumindest mittels einer Mehrzahl von in einem bestimmten Zeitraum gemessenen Längsbeschleunigungssignalen;
b) Berechnen eines zweiten Geschwindigkeitsverlaufes mittels einer Mehrzahl von in dem bestimmten Zeitraum gemessenen Radwegsignalen;
c) Vergleichen des berechneten ersten Geschwindigkeitsverlaufes mit dem berechneten zweiten Geschwindigkeitsverlauf zur Bereitstellung zumindest eines Vergleichswertes; und
d) Bestimmen des Ortsfehlers des Ortes des Kraftfahrzeuges in Abhängigkeit des zumindest einen Vergleichswertes.

Weiterhin wird ein Computerprogrammprodukt vorgeschlagen, welches auf einer programmgesteuerten Einrichtung die Durchführung eines wie oben erläuterten Verfahrens veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Weiter wird eine Vorrichtung zum Bestimmen eines schlupfbedingten Ortsfehlers eines Ortes eines Kraftfahrzeuges bei auftretendem Bremsschlupf vorgeschlagen, welche aufweist:
- ein erstes Mittel zum Berechnen eines ersten Geschwindigkeitsverlaufes zumindest mittels einer Mehrzahl von in einem bestimmten Zeitraum gemessenen Längsbeschleunigungssignalen;
- ein zweites Mittel zum Berechnen eines zweiten Geschwindigkeitsverlaufes mittels einer Mehrzahl von in dem bestimmten Zeitraum gemessenen Radwegsignalen;
- ein drittes Mittel zum Vergleichen des berechneten ersten Geschwindigkeitsverlaufes mit dem berechneten zweiten Geschwindigkeitsverlauf zur Bereitstellung zumindest eines Vergleichswertes; und
- ein viertes Mittel zum Bestimmen des Ortsfehlers des Ortes des Kraftfahrzeuges in Abhängigkeit des zumindest einen Vergleichswertes.

Das jeweilige Mittel, das erste bis vierte Mittel, kann hardwaretechnisch oder auch softwaretechnisch implementiert sein. Bei einer hardwaretechnischen Implementierung kann das jeweilige Mittel als Vorrichtung, zum Beispiel als Computer oder Mikroprozessor, Einrichtung oder auch als Teil eines Systems, zum Beispiel als Computer-System, ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Ferner wird ein Kraftfahrzeug vorgeschlagen, welches eine wie oben erläuterte, erfindungsgemäße Vorrichtung zum Bestimmen eines schlupfbedingten Ortsfehlers eines Ortes eines Kraftfahrzeuges bei auftretendem Bremsschlupf aufweist.

Im Sinne der vorliegenden Anmeldung ist ein Kraftfahrzeug ein Personenkraftwagen (Pkw), ein Lastkraftwagen (Lkw) oder ein Nutzkraftfahrzeuge (Nkw).

In den Unteransprüchen finden sich vorteilhafte Weiterbildungen und Ausgestaltungen des in Anspruch 1 angegebenen Verfahrens und der in Anspruch 15 angegebenen Vorrichtung.

Gemäß einer bevorzugten Weiterbildung der Erfindung weist der Schritt a) auf:
- Messen der Längsbeschleunigungssignale mittels zumindest eines Beschleunigungssensors während einer Fahrt des Kraftfahrzeuges;
- Speichern der jeweils letzten N in dem bestimmten Zeitraum gemessenen Längsbeschleunigungssignale;
- Bestimmen eines Off-Sets des zumindest einen Beschleunigungssensors im Stand des Kraftfahrzeuges;
- Korrigieren der gemessenen Längsbeschleunigungssignale mittels des bestimmten Off-Set; und
- Berechnen des ersten Geschwindigkeitsverlaufes mittels der Mehrzahl von in dem bestimmten Zeitraum gemessenen und korrigierten Längsbeschleunigungssignalen.

Gemäß einer weiteren bevorzugten Weiterbildung weist der Schritt b) auf:
- Messen der Radwegsignale mittels zumindest eines Radwegsensors während der Fahrt des Kraftfahrzeuges;
- Speichern der jeweils letzten M in dem bestimmten Zeitraum gemessenen Radwegsignale; und
- Berechnen des zweiten Geschwindigkeitsverlaufes mittels der Mehrzahl von in dem bestimmten Zeitraum gemessenen Radwegsignalen.

Gemäß einer weiteren bevorzugten Weiterbildung weist der Schritt c) auf:
- Berechnen von Geschwindigkeitsdifferenzen zwischen dem ersten Geschwindigkeitsverlauf und dem zweiten Geschwindigkeitsverlauf; und
- Berechnen des Bremsschlupfes in Abhängigkeit der berechneten Geschwindigkeitsdifferenzen.

Gemäß einer weiteren bevorzugten Weiterbildung wird der Bremsschlupf durch Integration der Geschwindigkeitsdifferenzen berechnet.

Gemäß einer weiteren bevorzugten Weiterbildung wird der Vergleichswert mit einem vorbestimmten Schwellenwert verglichen, wobei ein Bremsschlupf detektiert wird, falls der Vergleichswert größer als der vorbestimmte Schwellenwert ist.

Ferner wird ein Verfahren zur Unterstützung eines Einpark- oder Fahrvorgangs eines Kraftfahrzeuges vorgeschlagen, welches folgende Schritte hat:
- Bestimmen des Ortsfehlers des Ortes des Kraftfahrzeuges nach dem oben beschriebenen Verfahren zum Bestimmen eines schlupfbedingten Ortsfehlers eines Ortes des Kraftfahrzeuges bei auftretendem Bremsschlupf;
- Ermitteln einer Kraftfahrzeugposition des Kraftfahrzeuges aus den Radwegsignalen des zumindest einen Radwegsensors; und
- Korrigieren der aus den Radwegsignalen ermittelten Kraftfahrzeugposition mittels des bestimmten Ortsfehlers.

Vorteilhafterweise ist es durch das erfindungsgemäße Verfahren zum Bestimmen eines schlupfbedingten Ortsfehlers eines Ortes eines Kraftfahrzeuges möglich, Verfahren zur Unterstützung eines Einpark- oder Fahrvorgangs des Kraftfahrzeuges hinsichtlich der Genauigkeit zu verbessern. Insbesondere kann die aus den Radwegsignalen der Radwegsensoren ermittelte Kraftfahrzeugposition mittels des bestimmten Ortsfehlers korrigiert werden. Dadurch verringert sich die Wahrscheinlichkeit einer Kollision des Kraftfahrzeuges mit Parklücken begrenzenden Objekten beim Einparkvorgang weiter.

Gemäß einer bevorzugten Ausgestaltung dieses Verfahrens wird die Kraftfahrzeugposition zusätzlich mittels der Längsbeschleunigungssignale des zumindest einen Beschleunigungssensors ermittelt, wobei die aus den Radwegsignalen ermittelte Kraftfahrzeugposition mittels der aus den Längsbeschleunigungssignalen ermittelten Kraftfahrzeugposition und des bestimmten Ortsfehlers korrigiert wird.

Gemäß einer weiteren bevorzugten Ausgestaltung wird die Kraftfahrzeugposition zusätzlich mittels einer zweifachen Integration der Längsbeschleunigungssignale des zumindest einen Beschleunigungssensors berechnet.

Gemäß einer weiteren bevorzugten Ausgestaltung wird eine Einpark-Trajektorie mit zumindest einem Wendepunkt zum Einparken des Kraftfahrzeuges in einen bestimmten Parkplatz mittels eines Parklückenvermessungs-Systems berechnet, wobei die berechnete Einpark-Trajektorie mittels der korrigierten Kraftfahrzeugposition angepasst wird. Eine Einpark-Trajektorie zum Einparken des Kraftfahrzeuges in einen bestimmten Parkplatz wird vorzugsweise berechnet. Die Einpark-Trajektorie hat zumindest einen Wendepunkt, an dem sich die Fahrtrichtung ändert. Dabei werden vorerst Abstandsdaten von Hindernissen in der Umgebung des Parkplatzes berechnet. In Abhängigkeit der gemessenen Abstandsdaten kann ein Hindernismodell erstellt werden. Die Einparktrajektorie als Fahrstrecke zum Einparken in den Parkplatz kann dann in Abhängigkeit von dem erstellten Hindernismodell berechnet werden. Ein Beispiel zur Berechnung der Einpark-Trajektorie ergibt sich aus der DE 10 2006 027 114 A1.

Gemäß einer weiteren bevorzugten Ausgestaltung wird eine minimal zulässige Parklückengröße mittels eines Einparkhilfe-Systems bereitgestellt, wobei die bereitgestellte minimal zulässige Parklückengröße mittels der korrigierten Kraftfahrzeugposition angepasst wird.

Das Parklückenvermessungs-System und das Einparkhilfe-System können als getrennte Systeme, aber auch als ein einziges System ausgebildet sein.

Gemäß einer weiteren bevorzugten Ausgestaltung werden die berechnete Einpark-Trajektorie und die bereitgestellte minimal zulässige Parklückengröße mittels der korrigierten Kraftfahrzeugposition angepasst.

Gemäß einer weiteren bevorzugten Ausgestaltung wird der Vergleichswert mit einem vorbestimmten Schwellenwert verglichen, wobei ein Bremsschlupf detektiert wird, falls der Vergleichswert größer als der vorbestimmte Schwellenwert ist, wobei bei einem detektierten Bremsschlupf eine vorbestimmte Position des Kraftfahrzeuges, insbesondere eine Einparkhilfe-Funktion, abgeschaltet wird.

Gemäß einer weiteren bevorzugten Ausgestaltung wird ein Abstandskontrollsystem des Kraftfahrzeuges mittels der korrigierten Kraftfahrzeugposition eingestellt.

### Zeichnungen

Ausführungsbeispiele der Erfindung sind in den Zeichnungen dargestellt und in der nachfolgenden Beschreibung näher erläutert. Es zeigen:
- Fig. 1: ein schematisches Ablaufdiagramm eines Ausführungsbeispiels des erfindungs- gemäßen Verfahrens zum Bestimmen eines schlupfbedingten Ortsfehlers eines Ortes eines Kraftfahrzeuges bei auftretendem Bremsschlupf;
- Fig. 2: ein schematisches Ablaufdiagramm eines Ausführungsbeispiels eines Verfahrens zur Unterstützung eines Einpark- oder Fahrvorgangs eines Kraftfahrzeuges, wel- ches das erfindungsgemäße Verfahren nach Fig. 1 nutzt; und
- Fig. 3: ein schematisches Blockschaltbild eines Ausführungsbeispiels einer erfindungs- gemäßen Vorrichtung zum Bestimmen eines schlupfbedingten Ortsfehlers eines Ortes eines Kraftfahrzeuges bei auftretendem Bremsschlupf.

### Beschreibung der Ausführungsbeispiele:

In den Figuren bezeichnen gleiche Bezugszeichen gleiche oder funktionsgleiche Bestandteile.

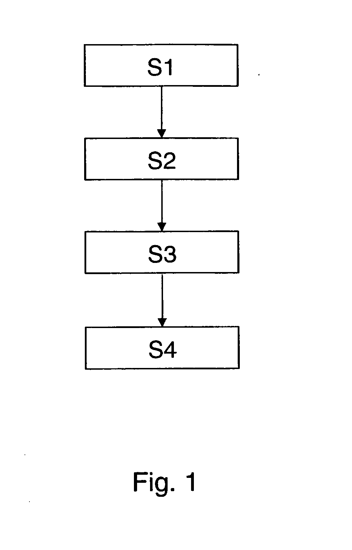

In Fig. 1 ist ein schematisches Ablaufdiagramm eines Ausführungsbeispiels des erfindungsgemäßen Verfahrens zum Bestimmen eines schlupfbedingten Ortsfehlers OF eines Ortes eines Kraftfahrzeuges bei auftretendem Bremsschlupf dargestellt.

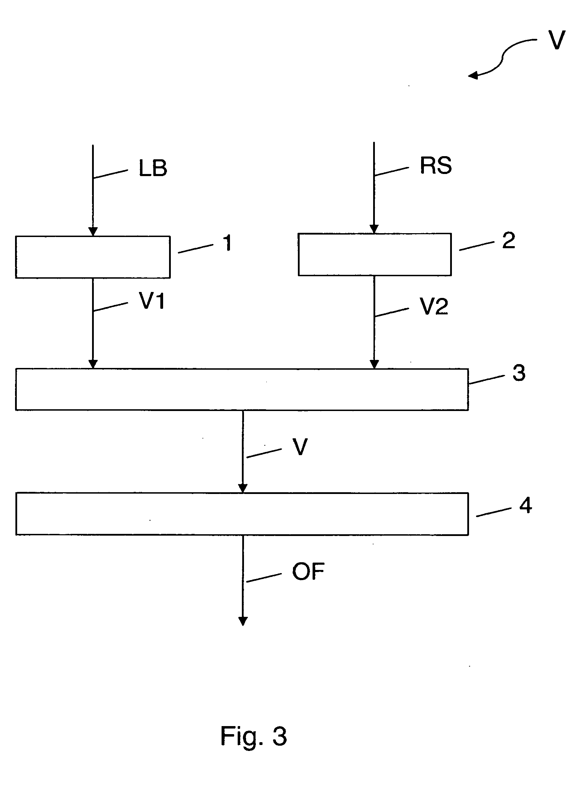

Das Ausführungsbeispiel des erfindungsgemäßen Verfahrens gemäß Fig. 1 wird mit Bezug auf Fig. 3 beschrieben und weist folgende Verfahrensschritte S1 - S4 auf:

### Verfahrensschritt S1:

Ein erster Geschwindigkeitsverlauf V1 wird mittels zumindest einer Mehrzahl von in einem bestimmten Zeitraum gemessenen Längsbeschleunigungssignalen LB berechnet. Dabei umfasst der erste Geschwindigkeitsverlauf V1 eine Abfolge der in dem bestimmten Zeitraum berechneten Geschwindigkeiten.

Dabei werden vorzugsweise folgende Schritte durchgeführt: In einem ersten Schritt werden die Längsbeschleunigungssignale LB mittels zumindest eines Beschleunigungssensors während einer Fahrt des Kraftfahrzeuges gemessen. In einem zweiten Schritt werden die jeweils letzten N in dem bestimmten Zeitraum gemessenen Längsbeschleunigungssignale LB zwischengespeichert. Somit werden stets die N aktuellsten Längsbeschleunigungssignale LB zwischengespeichert.

In einem dritten Schritt wird ein Off-Set des zumindest einen Beschleunigungssensors im Stand oder Stillstand des Kraftfahrzeuges bestimmt. Weil das Soll-Ausgangssignal des Beschleunigungssensors im Stillstand des Kraftfahrzeuges Null ist, beträgt der Off-Set des Beschleunigungssensors den tatsächlichen Ausgang des Beschleunigungssensors im Stillstand.

In einem vierten Schritt werden die gemessenen Längsbeschleunigungssignale LB mittels des bestimmten Off-Sets korrigiert. Abschließend wird in einem fünften Schritt der erste Geschwindigkeitsverlauf V1 mittels der Mehrzahl von in dem bestimmten Zeitraum gemessenen und korrigierten Längsbeschleunigungssignalen LB berechnet.

### Verfahrensschritt S2:

Ein zweiter Geschwindigkeitsverlauf V2 wird mittels einer Mehrzahl von in dem bestimmten Zeitraum gemessenen Radwegsignalen RS berechnet.

Dabei umfasst dieser Verfahrensschritt S2 vorzugsweise folgende Schritte:

In einem ersten Schritt werden die Radwegsignale RS mittels zumindest eines Radwegsensors während der Fahrt des Kraftfahrzeuges gemessen.

In einem zweiten Schritt werden die jeweils letzten M in dem bestimmten Zeitraum gemessenen Radwegsignale RS zwischengespeichert. Somit werden stets die aktuellsten M Radwegsignale RS zwischengespeichert.

In einem abschließenden dritten Schritt werden die zweiten Geschwindigkeitssignale V2 mittels der Mehrzahl von in dem bestimmten Zeitraum gemessenen Radwegsignalen RS berechnet.

### Verfahrensschritt S3:

Der berechnete erste Geschwindigkeitsverlauf V1 wird mit dem berechneten zweiten Geschwindigkeitsverlauf V2 zur Bereitstellung zumindest eines Vergleichswertes V verglichen.

Vorzugsweise werden dabei Geschwindigkeitsdifferenzen zwischen dem ersten Geschwindigkeitsverlauf V1 und V2 berechnet. Nachfolgend wird der Bremsschlupf in Abhängigkeit der berechneten Geschwindigkeitsdifferenzen ermittelt. Vorzugsweise wird der Bremsschlupf durch Integration der Geschwindigkeitsdifferenzen berechnet.

### Verfahrensschritt S4:

Der Ortsfehler OF des Ortes des Kraftfahrzeuges wird in Abhängigkeit des zumindest einen Vergleichswertes V bestimmt.

Dabei wird vorzugsweise der Vergleichswert V mit einem vorbestimmten Schwellenwert verglichen. Ein Bremsschlupf wird dann detektiert, falls der Vergleichswert V größer als der vorbestimmte Schwellenwert ist.

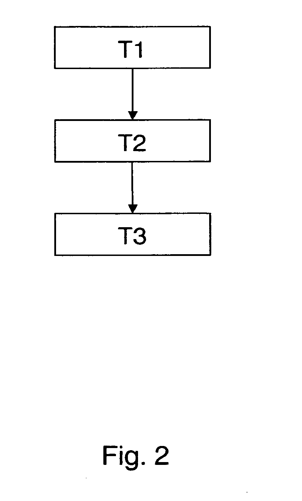

Fig. 2 zeigt ein schematisches Ablaufdiagramm eines Ausführungsbeispiels eines Verfahrens zur Unterstützung eines Einpark- oder Fahrvorgangs eines Kraftfahrzeuges. Dieses Verfahren nach Fig. 2 nutzt das erfindungsgemäße Verfahren nach Fig. 1 zum Bestimmen eines schlupfbedingten Ortsfehlers OF eines Ortes eines Kraftfahrzeuges bei auftretendem Bremsschlupf.

Das Ausführungsbeispiel des erfindungsgemäßen Verfahrens gemäß Fig. 2 hat folgende Verfahrensschritte T1 bis T3:

### Verfahrensschritt T1:

Der Ortsfehler OF des Ortes des Kraftfahrzeuges wird gemäß dem Verfahren nach Fig. 1 bestimmt.

### Verfahrensschritt T2:

Die Kraftfahrzeugposition des Kraftfahrzeuges wird aus den Radwegsignalen RS eines Radwegsensors ermittelt.

Vorzugsweise wird die Kraftfahrzeugposition zusätzlich mittels der Längsbeschleunigungssignale LB des zumindest einen Beschleunigungssensors ermittelt. Die aus den Radwegsignalen RS ermittelte Kraftfahrzeugposition wird mittels der aus den Längsbeschleunigungssignalen LB ermittelten Kraftfahrzeugposition und des bestimmten Ortsfehlers OF korrigiert. Insbesondere wird die Kraftfahrzeugposition zusätzlich mittels einer zweifachen Integration der Längsbeschleunigungssignale LB des zumindest einen Beschleunigungssensors berechnet.

### Verfahrensschritt T3:

Die aus den Radwegsignalen RS ermittelte Kraftfahrzeugposition wird mittels des bestimmten Ortsfehlers OF korrigiert.

Des Weiteren wird vorzugsweise eine Einpark-Trajektorie mit zumindest einem Wendepunkt zum Einparken des Kraftfahrzeuges in einen bestimmten Parkplatz mittels eines Parklückenvermessungssystems berechnet. Die berechnete Einpark-Trajektorie kann mittels der korrigierten Kraftfahrzeugposition angepasst werden.

Des Weiteren wird eine minimal zulässige Parklückengröße mittels eines Einparkhilfe-Systems bereitgestellt, wobei die bereitgestellte minimal zulässige Parklückengröße mittels der korrigierten Kraftfahrzeugposition angepasst wird.

Ferner wird vorzugsweise ein Abstandskontrollsystem des Kraftfahrzeuges mittels der korrigierten Kraftfahrzeugposition eingestellt.

In Fig. 3 ist ein schematisches Blockschaltbild eines Ausführungsbeispiels einer erfindungsgemäßen Vorrichtung V zum Bestimmen eines schlupfbedingten Ortsfehlers OF eines Ortes eines Kraftfahrzeuges bei auftretendem Bremsschlupf dargestellt.

Die Vorrichtung V hat ein erstes Mittel 1, ein zweites Mittel 2, ein drittes Mittel 3 und ein viertes Mittel 4.

Das erste Mittel 1 ist dazu eingerichtet, einen ersten Geschwindigkeitsverlauf V1 mittels zumindest einer Mehrzahl von in einem bestimmten Zeitraum gemessenen Längsbeschleunigungssignalen LB zu berechnen.

Das zweite Mittel 2 ist dazu eingerichtet, einen zweiten Geschwindigkeitsverlauf V2 mittels einer Mehrzahl von in dem bestimmten Zeitraum gemessenen Radwegsignalen RS zu berechnen.

Weiterhin ist das dritte Mittel 3 dazu eingerichtet, den berechneten ersten Geschwindigkeitsverlauf V1 mit dem berechneten zweiten Geschwindigkeitsverlauf V2 zur Bereitstellung zumindest eines Vergleichswertes V zu vergleichen.

Weiterhin ist das vierte Mittel 4 dazu eingerichtet, den Ortsfehler OF des Ortes des Kraftfahrzeuges in Abhängigkeit des zumindest einen Vergleichswertes V zu bestimmen.

## Patentansprüche

1. Verfahren zum Bestimmen eines schlupfbedingten Ortsfehlers (OF) eines Ortes eines Kraftfahrzeuges bei auftretendem Bremsschlupf, mit den Schritten:
a) Berechnen eines ersten Geschwindigkeitsverlaufes (V1) zumindest mittels einer Mehrzahl von in einem bestimmten Zeitraum gemessenen Längsbeschleunigungssignalen (LB);
b) Berechnen eines zweiten Geschwindigkeitsverlaufes (V2) mittels einer Mehrzahl von in dem bestimmten Zeitraum gemessenen Radwegsignalen (RS);
c) Vergleichen des berechneten ersten Geschwindigkeitsverlaufes (V1) mit dem berechneten zweiten Geschwindigkeitsverlauf (V2) zur Bereitstellung zumindest eines Vergleichswertes (V); und
d) Bestimmen des Ortsfehlers (OF) des Ortes des Kraftfahrzeuges in Abhängigkeit des zumindest einen Vergleichswertes (V).

2. Verfahren nach Anspruch 1,
**dadurch gekennzeichnet,**
**dass** der Schritt a) aufweist:
- Messen der Längsbeschleunigungssignale (LB) mittels zumindest eines Beschleunigungssensors während einer Fahrt des Kraftfahrzeuges;
- Speichern der jeweils letzten N in dem bestimmten Zeitraum gemessenen Längsbeschleunigungssignale (LB);
- Bestimmen eines Off-Sets des zumindest einen Beschleunigungssensors im Stand des Kraftfahrzeuges;
- Korrigieren der gemessenen Längsbeschleunigungssignale (LB) mittels des bestimmten Off-Set; und
- Berechnen des ersten Geschwindigkeitsverlaufes (V1) mittels der Mehrzahl von in dem bestimmten Zeitraum gemessenen und korrigierten Längsbeschleunigungssignalen (LB).

3. Verfahren nach Anspruch 1 oder 2,
**dadurch gekennzeichnet,**
**dass** der Schritt b) aufweist:
- Messen der Radwegsignale (RS) mittels zumindest eines Radwegsensors während der Fahrt des Kraftfahrzeuges;
- Speichern der jeweils letzten M in dem bestimmten Zeitraum gemessenen Radwegsignale (RS); und
- Berechnen des zweiten Geschwindigkeitsverlaufes (V2) mittels der Mehrzahl von in dem bestimmten Zeitraum gemessenen Radwegsignalen (RS).

4. Verfahren nach Anspruch 1, 2 oder 3,
**dadurch gekennzeichnet,**
**dass** der Schritt c) aufweist:
- Berechnen von Geschwindigkeitsdifferenzen zwischen dem ersten Geschwindigkeitsverlauf (V1) und dem zweiten Geschwindigkeitsverlauf (V2); und
- Berechnen des Bremsschlupfes in Abhängigkeit der berechneten Geschwindigkeitsdifferenzen.

5. Verfahren nach Anspruch 4,
**dadurch gekennzeichnet,**
**dass** der Bremsschlupf durch Integration der Geschwindigkeitsdifferenzen berechnet wird.

6. Verfahren nach Anspruch 1, 2 oder 3,
**dadurch gekennzeichnet,**
**dass** der Vergleichswert (V) mit einem vorbestimmten Schwellenwert verglichen wird, wobei ein Bremsschlupf detektiert wird, falls der Vergleichswert größer als der vorbestimmte Schwellenwert ist.

7. Verfahren zur Unterstützung eines Einpark- oder Fahrvorgangs eines Kraftfahrzeuges, mit den Schritten:
- Bestimmen des Ortsfehlers (OF) des Ortes des Kraftfahrzeuges nach Anspruch 1 oder einem der Ansprüche 2 bis 6.
- Ermitteln einer Kraftfahrzeugposition des Kraftfahrzeuges aus den Radwegsignalen (RS) des zumindest einen Radwegsensors; und
- Korrigieren der aus den Radwegsignalen (RS) ermittelten Kraftfahrzeugposition mittels des bestimmten Ortsfehlers (OF).

8. Verfahren nach Anspruch 7,
**dadurch gekennzeichnet,**
**dass** die Kraftfahrzeugposition zusätzlich mittels der Längsbeschleunigungssignale (LB) des zumindest einen Beschleunigungssensors ermittelt wird, wobei die aus den Radwegsignalen (RS) ermittelte Kraftfahrzeugposition mittels der aus den Längsbeschleunigungssignalen (LB) ermittelten Kraftfahrzeugposition und des bestimmten Ortsfehlers (OF) korrigiert wird.

9. Verfahren nach Anspruch 8,
**dadurch gekennzeichnet,**
**dass** die Kraftfahrzeugposition zusätzlich mittels einer zweifachen Integration der Längsbeschleunigungssignale (LB) des zumindest einen Beschleunigungssensors berechnet wird.

10. Verfahren nach Anspruch 7, 8 oder 9,
**dadurch gekennzeichnet,**
**dass** eine Einpark-Trajektorie mit zumindest einem Wendepunkt zum Einparken des Kraftfahrzeuges in einen bestimmten Parkplatz mittels eines Parklückenvermessungs-Systems berechnet wird, wobei die berechnete Einpark-Trajektorie mittels der korrigierten Kraftfahrzeugposition angepasst wird.

11. Verfahren nach einem der Ansprüche 7 bis 10,
**dadurch gekennzeichnet,**
**dass** eine minimal zulässige Parklückengröße mittels eines Einparkhilfe-Systems bereitgestellt wird, wobei die bereitgestellte minimal zulässige Parklückengröße mittels der korrigierten Kraftfahrzeugposition angepasst wird.

12. Verfahren nach den Ansprüchen 10 und 11,
**dadurch gekennzeichnet,**
**dass** die berechnete Einpark-Trajektorie und die bereitgestellte minimal zulässige Parklückengröße mittels der korrigierten Kraftfahrzeugposition angepasst werden.

13. Verfahren nach einem der Ansprüche 7 bis 12,
**dadurch gekennzeichnet,**
**dass** der Vergleichswert (V) mit einem vorbestimmten Schwellenwert verglichen wird, wobei ein Bremsschlupf detektiert wird, falls der Vergleichswert (V) größer als der vorbestimmte Schwellenwert ist, wobei bei einem detektierten Bremsschlupf eine vorbestimmte Position des Kraftfahrzeuges, insbesondere eine Einparkhilfe-Funktion, abgeschaltet wird.

14. Verfahren nach einem der Ansprüche 7 bis 13,
**dadurch gekennzeichnet,**
**dass** ein Abstandskontrollsystem des Kraftfahrzeuges mittels der korrigierten Kraftfahrzeugposition eingestellt wird.

15. Vorrichtung (V) zum Bestimmen eines schlupfbedingten Ortsfehlers (OF) eines Ortes eines Kraftfahrzeuges bei auftretendem Bremsschlupf, mit:
a) einem ersten Mittel (1) zum Berechnen eines ersten Geschwindigkeitsverlaufes (V1) mittels zumindest einer Mehrzahl von in einem bestimmten Zeitraum gemessenen Längsbeschleunigungssignalen (LB);
b) einem zweiten Mittel (2) zum Berechnen eines zweiten Geschwindigkeitsverlaufes (V2) mittels einer Mehrzahl von in dem bestimmten Zeitraum gemessenen Radwegsignalen (RS);
c) einem dritten Mittel (3) zum Vergleichen des berechneten ersten Geschwindigkeitsverlaufes (V1) mit dem berechneten zweiten Geschwindigkeitsverlauf (V2) zur Bereitstellung zumindest eines Vergleichswertes (V); und
d) einem vierten Mittel (4) zum Bestimmen des Ortsfehlers (OF) des Ortes des Kraftfahrzeuges in Abhängigkeit des zumindest einen Vergleichswertes (V).

## Claims

1. Method for determining a slip-induced position error (OF) of a position of a motor vehicle when brake slip occurs, having the steps:
a) calculation of a first speed profile (V1) at least by means of a multiplicity of longitudinal acceleration signals (LB) which are measured in a specific time period;
b) calculation of a second speed profile (V2) by means of a multiplicity of wheel travel signals (RS) which are measured in the specific time period;
c) comparison of the calculated first speed profile (V1) with the calculated second speed profile (V2) in order to make available at least one comparison value (V); and
d) determination of the position error (OF) of the position of the motor vehicle as a function of the at least one comparison value (V).

2. Method according to Claim 1,
**characterized**
**in that** the step a) comprises:
- measurement of the longitudinal acceleration signals (LB) by means of at least one acceleration sensor during travel of the motor vehicle;
- storage of the respective last N longitudinal acceleration signals (LB) measured in the specific time period;
- determination of an offset of the at least one acceleration sensor in the stationary state of the motor vehicle;
- correction of the measured longitudinal acceleration signals (LB) by means of the specific offset; and
- calculation of the first speed profile (V1) by means of the multiplicity of longitudinal acceleration signals (LB) which are measured and corrected in the specific time period.

3. Method according to Claim 1 or 2,
**characterized**
**in that** the step b) comprises:
- measurement of the wheel travel signals (RS) by means of at least one wheel travel sensor during travel of the motor vehicle;
- storage of the respective last M wheel travel signals (RS) measured in the specific time period; and
- calculation of the second speed profile (V2) by means of the multiplicity of wheel travel signals (RS) which are measured in the specific time period.

4. Method according to Claim 1, 2 or 3,
**characterized**
**in that** the step c) comprises:
- calculation of speed differences between the first speed profile (V1) and the second speed profile (V2);
and
- calculation of the brake slip as a function of the calculated speed differences.

5. Method according to Claim 4,
**characterized**
**in that** the brake slip is calculated by integrating the speed differences.

6. Method according to Claim 1, 2 or 3, **characterized**
**in that** the comparison value (V) is compared with a predetermined threshold value, wherein a brake slip is detected if the comparison value is higher than the predetermined threshold value.

7. Method for assisting a parking or driving process of a motor vehicle, having the steps:
- determination of the position error (OF) of the position of the motor vehicle according to Claim 1 or one of Claims 2 to 6,
- determination of a motor vehicle position of the motor vehicle from the wheel travel signals (RS) of the at least one wheel travel sensor; and
- correction of the motor vehicle position, determined from the wheel travel signals (RS), by means of the specific position error (OF).

8. Method according to Claim 7,
**characterized**
**in that** the motor vehicle position is additionally determined by means of the longitudinal acceleration signals (LB) of the at least one acceleration sensor, wherein the motor vehicle position determined from the wheel travel signals (RS) is corrected by means of the motor vehicle position determined from the longitudinal acceleration signals (LB) and the determined position error (OF).

9. Method according to Claim 8,
**characterized**
**in that** the motor vehicle position is additionally calculated by means of a double integration of the longitudinal acceleration signals (LB) of the at least one acceleration sensor.

10. Method according to Claim 7, 8 or 9,
**characterized**
**in that** a parking trajectory having at least one inflection point for parking the motor vehicle in a specific parking space is calculated by means of a parking space-measurement system, wherein the calculated parking trajectory is adapted by means of the corrected motor vehicle position.

11. Method according to one of Claims 7 to 10,
**characterized**
**in that** a minimum permissible parking space size is made available by means of a parking aid system, wherein the minimum permissible parking space size which is made available is adapted by means of the corrected motor vehicle position.

12. Method according to Claims 10 and 11,
**characterized**
**in that** the calculated parking trajectory and the minimum permissible parking space size which is made available are adapted by means of the corrected motor vehicle position.

13. Method according to one of Claims 7 to 12,
**characterized**
**in that** the comparison value (V) is compared with a predetermined threshold value, wherein a brake slip is detected if the comparison value (V) is higher than the predetermined threshold value, wherein in the case of a detected brake slip a predetermined position of the motor vehicle, in particular a parking assistance function, is switched off.

14. Method according to one of Claims 7 to 13,
**characterized**
**in that** an interval-monitoring system of the motor vehicle is set by means of the corrected motor vehicle position.

15. Device (V) for determining a slip-induced position error (OF) of a position of a motor vehicle when brake slip occurs, having:
a) a first means (1) for calculating a first speed profile (V1) by means of at least a multiplicity of longitudinal acceleration signals (LB) which are measured in a specific time period;
b) a second means (2) for calculating a second speed profile (V2) by means of a multiplicity of wheel travel signals (RS) which are measured in the specific time period;
c) a third means (3) for comparing the calculated first speed profile (V1) with the calculated second speed profile (V2) in order to make available at least one comparison value (V); and
d) a fourth means (4) for determining the position error (OF) of the position of the motor vehicle as a function of the at least one comparison value (V).

## Revendications

1. Procédé de détermination d'une erreur de positionnement (OF) provoquée par un dérapage d'un véhicule automobile suite à un dérapage lors du freinage, avec les étapes suivantes :
a) calcul d'une première courbe de vitesse (V1) au moins à l'aide d'une pluralité de signaux d'accélération longitudinale (LB) mesurés pendant une période définie ;
b) calcul d'une deuxième courbe de vitesse (V2) à l'aide d'une pluralité de signaux de trajectoire de roue (RS) mesurés pendant une période définie ;
c) comparaison de la première courbe de vitesse (V1) calculée avec la deuxième courbe de vitesse (V2) calculée pour mettre à disposition au moins une valeur de comparaison (V) ; et
d) détermination de l'erreur de positionnement (OF) du véhicule automobile en fonction de l'au moins une valeur de comparaison (V).

2. Procédé selon la revendication 1, **caractérisé en ce que** l'étape a) comporte :
- mesure des signaux d'accélération longitudinale (LB) à l'aide d'au moins un capteur d'accélération pendant une course du véhicule automobile ;
- mémorisation des respectivement N derniers signaux d'accélération longitudinale (LB) mesurés pendant une période définie ;
- détermination d'un décalage de l'au moins un capteur d'accélération à l'arrêt du véhicule automobile ;
- correction des signaux d'accélération longitudinale (LB) mesurés à l'aide du décalage défini ; et
- calcul de la première courbe de vitesse (V1) à l'aide de la pluralité de signaux d'accélération longitudinale (LB) mesurés pendant une période définie et corrigés.

3. Procédé selon la revendication 1 ou 2, **caractérisé en ce que** l'étape b) comporte :
- mesure des signaux de trajectoire de roue (RS) à l'aide d'au moins un capteur de trajectoire de roue pendant la course du véhicule automobile ;
- mémorisation des respectivement M derniers signaux de trajectoire de roue (RS) mesurés pendant une période définie ; et
- calcul de la deuxième courbe de vitesse (V2) à l'aide de la pluralité de signaux de trajectoire de roue (RS) mesurés pendant une période définie.

4. Procédé selon la revendication 1, 2 ou 3, **caractérisé en ce que** l'étape c) comporte :
- calcul des différences de vitesse entre la première courbe de vitesse (V1) et la deuxième courbe de vitesse (V2) ; et
- calcul du dérapage lors du freinage en fonction de des différences de vitesse calculées.

5. Procédé selon la revendication 4, **caractérisé en ce que** le dérapage lors du freinage est calculé par intégration des différences de vitesse.

6. Procédé selon la revendication 1, 2 ou 3, **caractérisé en ce que** la valeur de comparaison (V) est comparée à une valeur seuil prédéfinie, un dérapage lors du freinage étant détecté si la valeur de comparaison est supérieure à la valeur seuil prédéfinie.

7. Procédé d'aide au stationnement ou à la conduite d'un véhicule automobile, avec les étapes suivantes :
- détermination de l'erreur de positionnement (OF) du véhicule automobile selon la revendication 1 ou l'une quelconque des revendications 2 à 6 ;
- calcul d'une position du véhicule automobile à partir des signaux de trajectoire de roue (RS) de l'au moins un capteur de trajectoire de roue ; et
- correction de la position du véhicule automobile calculée à partir des signaux de trajectoire de roue (RS) à l'aide de l'erreur de positionnement définie (OF).

8. Procédé selon la revendication 7, **caractérisé en ce que** la position du véhicule automobile est en outre calculée à l'aide des signaux d'accélération longitudinale (LB) de l'au moins un capteur d'accélération, la position du véhicule automobile calculée à partir des signaux de trajectoire de roue (RS) étant corrigée à l'aide de la position du véhicule automobile calculée à partir des signaux d'accélération longitudinale (LB) et de l'erreur de positionnement définie (OF).

9. Procédé selon la revendication 8, **caractérisé en ce que** la position du véhicule automobile est en outre calculée à l'aide d'une double intégration des signaux d'accélération longitudinale (LB) de l'au moins un capteur d'accélération.

10. Procédé selon la revendication 7, 8 ou 9, **caractérisé en ce qu'**une trajectoire de stationnement dotée d'au moins un point d'inflexion est calculée pour stationner le véhicule automobile dans une place de stationnement définie à l'aide d'un système de mesure d'espace de stationnement, la trajectoire de stationnement calculée étant ajustée à l'aide de la position du véhicule automobile corrigée.

11. Procédé selon l'une quelconque des revendications 7 à 10, **caractérisé en ce qu'**une taille d'espace de stationnement minimale autorisée est mise à disposition par un système d'aide au stationnement, la taille d'espace de stationnement minimale autorisée mise à disposition étant ajustée au moyen de la position du véhicule automobile corrigée.

12. Procédé selon les revendications 10 et 11, **caractérisé en ce que** la trajectoire de stationnement calculée et la taille d'espace de stationnement sont ajustées à l'aide de la position du véhicule automobile corrigée.

13. Procédé selon l'une quelconque des revendications 7 à 12, **caractérisé en ce que** la valeur de comparaison (V) est comparée à une valeur seuil prédéfinie, un dérapage lors du freinage étant détecté si la valeur de comparaison (V) est supérieure à la valeur seuil prédéfinie, une position prédéfinie du véhicule automobile, notamment une fonction d'aide au stationnement, étant déconnectée en cas de détection d'un dérapage lors du freinage.

14. Procédé selon l'une quelconque des revendications 7 à 13, **caractérisé en ce qu'**un système de contrôle de distance du véhicule automobile est réglé à l'aide de la position du véhicule automobile corrigée.

15. Dispositif (V) de détermination d'une erreur de positionnement (OF) provoquée par le dérapage d'un véhicule automobile suite à un dérapage lors du freinage, avec :
a) un premier moyen (1) de calcul d'une première courbe de vitesse (V1) à l'aide d'au moins une pluralité de signaux d'accélération longitudinale (LB) mesurés pendant une période définie ;
b) un deuxième moyen (2) de calcul d'une deuxième courbe de vitesse (V2) à l'aide d'une pluralité de signaux de trajectoire de roue (RS) mesurés pendant une période définie ;
c) un troisième moyen (3) de comparaison de la première courbe de vitesse calculée (V1) avec la deuxième courbe de vitesse calculée (V2) pour mettre à disposition au moins une valeur de comparaison (V) ; et
d) un quatrième moyen (4) de détermination de l'erreur de positionnement (OF) du véhicule automobile en fonction de l'au moins une valeur de comparaison (V).
